# DEMANDE DE BREVET EUROPEEN

(11) **EP 0 882 620 A1**
(43) Date de publication de la demande: **09.12.1998**
(21) Numéro de dépôt: 98401336.7
(22) Date de dépôt: 04.06.1998
(51) Int. Cl.: B60P 3/22

(54) **Citernes semi-remorques**

(30) Priorité: 04.06.1997 FR 9706898
(71) Demandeur: Etablissement MAGYAR (S.A.), 21004 Dijon (FR)
(72) Inventeur: Magyar, Georges, 21004 Dijon (FR)
(74) Mandataire: Breese, Pierre

(57) **Abrégé**

La présente invention concerne une citerne semi-remorque constituée par une enveloppe de forme générale cylindrique fermée à ses deux extrémités frontales par des fonds de citerne, l'enveloppe cylindrique est formée par le raccordement d'un segment avant (4) tubulaire, d'un deuxième segment (5) conique et d'un segment principal (6) tubulaire.

## Description

La présente invention concerne le domaine des citernes semi-remorques.

Les citernes semi-remorque de l'état de la technique sont constituées par une enveloppe de forme générale cylindrique fermée à ses deux extrémités frontales par des fonds de citerne. L'enveloppe est constituée des feuilles de tôle d'acier soudées. Généralement, l'enveloppe est formée de plusieurs segments tubulaires.

Le but de l'invention est d'optimiser la contenance de telles citernes en maintenant un centre de gravité aussi bas que possible.

Un but secondaire de l'invention est d'améliorer la facilité de vidange.

A cet effet, l'invention concerne dans son acception la plus générale une citerne semi-remorque caractérisée en ce que l'enveloppe cylindrique est formée par le raccordement d'un segment avant tubulaire, d'un deuxième segment conique et d'un segment principal (6) tubulaire.

Avantageusement, le segment principal (6) tubulaire est prolongé par un segment arrière conique.

Selon une variante particulière, le segment avant présente une longueur correspondant sensiblement à la longueur de la plate-forme d'attelage.

Selon un mode de réalisation préféré, la section du fond de citerne arrière est comprise entre la section du fond de citerne avant et la section du segment principal (6).

De préférence, le segment arrière présente une section longitudinale trapézoïdale, le fond étant légèrement relevé.

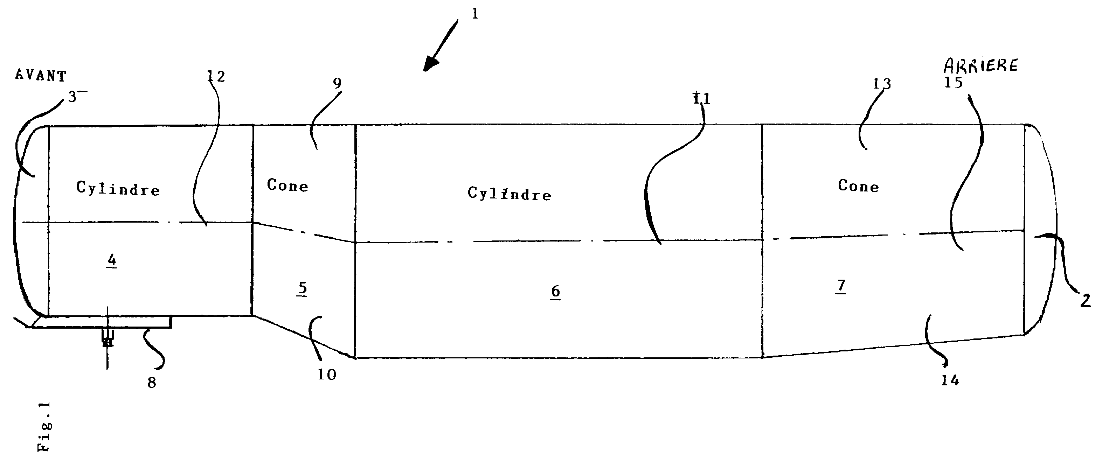

L'invention sera mieux comprise à la lecture de la description qui suit, se référant à un exemple de réalisation non limitatif illustrée par la figure unique annexée représentant une vue en coupe longitudinale de la citerne.

La citerne est formée par une enveloppe (1) de forme générale cylindrique fermée aux deux extrémités par des fonds arrière (2) et avant (3).

La citerne présente un segment avant (4) de forme tubulaire. La longueur de ce segment correspond dans l'exemple décrit à la longueur de la plate-forme d'attelage (8). Ce premier segment tubulaire (4) est prolongé par un segment (5) tronc-conique. La partie supérieure (9) du segment (5) est semi-tubulaire, et sa partie inférieure semi-tronconique. Ce segment (5) prolonge le segment avant (4). Sa partie inférieure (10) est semi-conique. Le segment (5) forme un segment de raccordement entre le segement avant (4) et le segment principal (6) de forme tubulaire. L'axe longitudinal (11) est décalé vers le bas par rapport à l'axe longitudinal (12) du segment avant (4). Ce décalage vers le bas permet d'abaisser le centre de gravité du segment correspondant au plus grand volume de remplissage. Le segment principal (6) est prolongé par un segment arrière (7) qui est également de forme tronconique oblique. La partie supérieure (13) est dans le prolongement de la partie supérieure du segement principal (6). La partie inférieure (14) remonte légèrement vers l'arrière, de façon à former une pente facilitant la récupération des liquides transportés dans la citerne par les vannes de vidanges disposées au niveau du segment principal (6). L'axe médian (15) est dans le prolongement de l'axe médian (11) du segment principal (6).

L'invention est décrite dans ce qui précède à titre d'exemple non limitatif. L'homme du métier pourra réaliser diverses variantes sans pour autant sortir du cadre de l'invention.

## Revendications

1. Citerne semi-remorque pour le transport de liquide, constituée par une enveloppe de forme générale cylindrique fermée à ses deux extrémités frontales par des fonds de citerne, l'enveloppe cylindrique étant formée par le raccordement d'un segment avant (4) tubulaire, d'un deuxième segment (5) conique et d'un segment principal (6) tubulaire, caractérisé en ce que le segment arrière (7) présente une section longitudinale trapézoïdale, le fond (14) étant légèrement relevé et présentant une section comprise entre la section du fond de citerne avant et la section su segment principal (6).

2. Citerne semi-remorque selon la revendication 1, caractérisée en ce que le segment principal (6) tubulaire est prolongé par un segment arrière (7) tronconique.

3. Citerne semi-remorque selon la revendication 1 ou 2 caractérisée en ce que le segment avant (4) présente une longueur correspondant sensiblement à la longueur de la plate-forme d'attelage.

4. Citerne semi-remorque selon l'une au moins des revendications précédentes caractérisée en ce que la section du fond de citerne arrière est comprise entre la section du fond de citerne avant et la section du segment principal (6).

5. Citerne semi-remorque selon l'une au moins des revendications 2 à 4, caractérisée en ce que le segment arrière (7) présente une section longitudinale trapézoïdale, le fond (14) étant légèrement relevé.

6. Citerne semi-remorque selon l'une au moins des revendications précédentes caractérisée en ce que l'axe médian (11) du segment principal (6) est abaissé par rapport à l'axe médian (12) du segment avant (4).

7. Citerne semi-remorque selon la revendication 2, caractérisée en ce que le segment principal (6) tubulaire est prolongé par un segment arrière (7) tronconique oblique.
